# EUROPEAN PATENT APPLICATION

(11) **EP 2 329 792 A1**
(43) Date of publication of application: **08.06.2011**
(21) Application number: 10015107.5
(22) Date of filing: 29.11.2010
(51) Int. Cl.: A61C 8/00

(54) **Abutment for dental magnetic attachment**

(30) Priority: 07.12.2009 JP 2009277723
(71) Applicant: GC Corporation, Itabashi-ku Tokyo 174-8585 (JP)
(72) Inventor: Okazaki, Joji, Ikeda-City Osaka (JP); Maeda, Teruta, Kobe-City Hyogo (JP); Kuremoto, Koh-ichi, Kobe-City Hyogo (JP); Eto, Takanori, Suita-City Osaka (JP); Inoue, Masahiro, Toyonaka-City Osaka (JP); Yamada, Yutaka, Suita-City Osaka (JP); Takahashi, Masashi, Itabashi-ku Tokyo (JP)
(74) Representative: Müller-Boré & Partner Patentanwälte

(57) **Abstract**

An abutment for a dental magnetic attachment capable of forming a complete closed circuit through a keeper by magnetic lines from a magnet and fixing the keeper without necessity of care to metal allergy is provided, in an implant treatment of magnetically attracting a magnet contained in a denture to the keeper fixed at an implant fixture embedded in a jawbone. An abutment 1 for a dental magnetic attachment is made of a titanium or a titanium alloy, and has a structure including: a male screw part 1a at a center part of a bottom surface, where the male screw part 1a is screwed into a female screw part 3a of an implant fixture 3; a keeper attaching hole 1b at an upper surface, where a keeper 2 having a uniform thickness and the same size/the same area as those of an attracting surface of a magnet is inserted and bonded/fixed in the keeper attaching hole 1b; and an engagement part 1c for a rotary tool at a center in the keeper attaching hole 1b and/or at an outer frame part around the keeper attaching hole, where the engagement part 1c is provided for screwing the abutment 1 into the implant fixture 3.

## Description

The present invention relates to an abutment for a dental magnetic attachment, which is used for attaching a keeper to an implant fixture embedded in a jawbone, so that the keeper is attracted by the magnetic attachment provided in a dental prosthesis.

In dental treatments, there has been developed such a dental implant technique that an implant fixture to be used as a device for maintaining and stabilizing a dental prosthesis is embedded in an embedding hole formed in a jawbone at a lost tooth position to functionally substitutes for a dental root in a natural tooth, a dental prosthesis fixing device which is a second upper structural member is fixed on an abutment which is a first upper structural member directly fixed on the oral cavity inner side of the implant fixture, whereby a dental prosthesis maintaining device is structured, and then a dental prosthesis is fixed on the dental prosthesis fixing device.

A technique of detachably mounting a denture to an implant has been developed. In this technique, an abutment provided with a keeper (a magnetic body) or a keeper (a magnetic body) is fixed to an implant fixture embedded in the jawbone, and a magnet provided in the denture is magnetically attracts the keeper. Various types of the keeper are used in the technique (for example, refer to Japanese Patent Application Laid-Open No. 2000-24004, Japanese Patent Application Laid-Open No. 2003-250816, Japanese Patent Application Laid-Open No. 2006-271767, and Japanese Patent Application Laid-Open No. 2007-29162).

However, in a structure of fixing a keeper (a magnetic body) through an abutment or directly on an oral cavity inner side of the implant fixture embedded in a jawbone as mentioned above, when the structure of directly fixing the keeper on an oral cavity inner side is used (Japanese Patent Application Laid-Open No. 2003-250816, Japanese Patent Application Laid-Open No. 2006-271767, and Japanese Patent Application Laid-Open No. 2007-29162), it is necessary to provide a male screw for screwing the keeper to the implant fixture, so that a thickness of the keeper can not be made uniform, magnetic lines from the magnet do not form a complete closed circuit through the keeper, and thus there is a fault that attracting force of the magnet cannot be effectively utilized. In addition to this, there is a fault that the keeper consisting of a soft magnetic body which has not bio-compatibility is in contact with a gingiva. Further, since the structure needs an engagement hole for a fixing tool in a keeper surface for attaching the keeper to the implant fixture, the attracting surface of the keeper and the attracting surface of the magnet do not have the same size/the same area, so that attracting force may be badly influenced. Furthermore, since filths such as food residues and the like adhere to the hole in the keeper surface, the structure has a fault that it is not sanitary. When a structure of fixing the keeper through the abutment on the oral cavity inner side of the implant fixture is used (Japanese Patent Application Laid-Open No. 2003-250816), since it is necessary to have a hole for a screw for fixing the keeper to the abutment, the attracting surface of the keeper and the attracting surface of the magnet do not have the same size/the same area, so that the attracting force may be badly influenced. Further, since filths such as food residues and the like adhere to the hole on the keeper surface, the structure has a fault that it is not sanitary.

An objective of the present invention is to provide an abutment for a dental magnetic attachment capable of solving the above-described faults in the conventional technique that a denture is detachably mounted to an implant by fixing a keeper to an implant fixture embedded in a jawbone and magnetically attracting a magnet provided in the denture to the keeper, capable of making it unnecessary to have an engagement hole for a fixing tool for attaching an abutment to the keeper surface and a screw hole for fixing, capable of making the keeper to have a uniform thickness and the same size/the same area as those of the attracting surface of the magnet, and capable of being fixed to an implant fixture to be in a state that a surface of the abutment other than the keeper surface contacting the magnet is covered with a titanium or a titanium alloy which has good bio-compatibility.

Present inventors carried out earnest works to solve the aforementioned problems, and as a result, they found out the following structure of an abutment for a dental magnetic attachment to complete the present invention. The abutment is made of a titanium or a titanium alloy, and includes a male screw part provided projectingly at a center part of a bottom surface, in which the male screw part is screwed into a female screw part of an implant fixture, a keeper attaching hole provided at an upper surface in which a keeper having a uniform thickness and the same size/the same area as those of an attracting surface of a magnet is inserted and bonded/fixed in the keeper attaching hole and an engagement part for a rotary tool used for screwing the abutment into the implant fixture, in which the engagement part consists of a hole having a cross sectional shape other than a circular shape at a center in the keeper attaching hole and/or consists of a cutout part at an outer frame part around the keeper attaching hole.

According to an aspect of the present invention, an abutment for a dental magnetic attachment is made of titanium or a titanium alloy, and includes a male screw part provided projectingly at a center part of a bottom surface, in which the male screw part is screwed into a female screw part of an implant fixture, a keeper attaching hole provided at an upper surface, in which a keeper having a uniform thickness and the same size/the same area as those of an attracting surface of a magnet is inserted and bonded/fixed in the keeper attaching hole and an engagement part for a rotary tool used for screwing the abutment into the implant fixture, in which the engagement part consists of a hole having a cross sectional shape other than a circular shape at a center in the keeper attaching hole and/or consists of a cutout part at an outer frame part around the keeper attaching hole.

In the abutment for a dental magnetic attachment according to the present invention, the male screw part to be screwed into the female screw part of the implant fixture is provided projectingly on the center part of the bottom surface. Further, an engagement part for a rotary tool, which is for screwing the abutment into the implant fixture, consists of a hole having a cross sectional shape other than a circular shape at a center in the keeper attaching hole and/or consists of a cutout part at an outer frame part around the keeper attaching hole. Thus, the abutment can be easily fixed to the implant fixture by engaging the rotary tool with the engagement part for the rotary tool, rotating the rotary tool, and thereby screwing the male screw part into the female screw part of the implant fixture. Further, the keeper attaching hole provided at the upper surface is formed to have such a size and such a shape that the keeper having the uniform thickness and the same size/the same area as those of the attracting surface of the magnet can be inserted and bonded/fixed. Thus, magnetic lines from the magnet can form a complete closed circuit through the keeper, so that the attracting force of the magnet can be utilized effectively. Furthermore, since the keeper is just inserted into and bonded/fixed to the keeper attaching hole, an engagement hole for a fixing tool for attaching the keeper to the abutment and a hole for a screw for fixing the keeper to the abutment do not exist on a keeper surface. Thus, the magnetic lines from the magnet can form the complete closed circuit through the keeper, so that the attracting force of the magnet can be utilized effectively. In addition, since filths such as food residues and the like in an oral cavity do not adhere, the abutment is sanitary. Furthermore, since the abutment has a structure that the keeper is not in contact with a gingiva at all and a part in contact with the gingiva is made of a titanium or a titanium alloy, the abutment has bio-compatibility, so that there occurs no problem of allergy to metal and the like.
Fig. 1 is a front view illustrating a section of a left half of one example of an abutment for a dental magnetic attachment according to the present invention.
Fig. 2 is a left side view illustrating a section of a left half of the abutment for a dental magnetic attachment according to the present invention, which is illustrated in Fig. 1.
Fig. 3 is a plan view of the abutment for a dental magnetic attachment according to the present invention, which is illustrated in Fig. 1.
Fig. 4 is a sectional explanatory view illustrating a state that the abutment for a dental magnetic attachment according to the present invention, which is illustrated in Fig. 1 is screwed into an implant fixture and a keeper is inserted into and bonded/fixed to the keeper attaching hole.
Fig. 5 is a front view illustrating a section of a left half of another example of an abutment for a dental magnetic attachment according to the present invention.

In the drawings, an abutment 1 for a dental magnetic attachment according to the present invention is made of a titanium or a titanium alloy. In the abutment 1, a male screw part 1a is provided projectingly on a center part of a bottom surface, and the male screw part 1a is screwed into a female screw part 3a of an implant fixture 3 described below. A keeper attaching hole 1b is provided at an upper surface, and a keeper 2 having a uniform thickness and the same size/the same area as those of an attracting surface of a magnet is inserted and bonded/fixed therein, where the keeper 2 will be described below. An engagement part 1c for a rotary tool, which is used for screwing the abutment 1 into the implant fixture 3, consists of a hole having a cross sectional shape other than a circular shape at a center in the keeper attaching hole 1b, and/or consists of a cutout part at an outer frame part around the keeper attaching hole 1b.

If the male screw part 1a can screw into the female screw part 3a provided in the implant fixture which is on the market, the implant fixture 3 on the market can be used as it is, so that such is preferable.

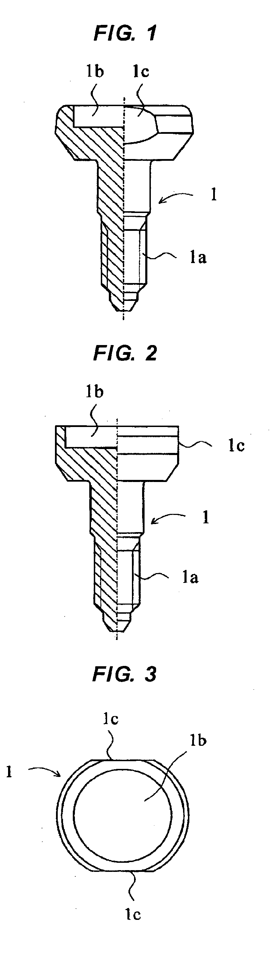

The keeper attaching hole 1b is formed to have such a size that the keeper 2 can be inserted and bonded/fixed through a dental cement or a dental bonding material, where the keeper 2 is that in a set on the market of a magnet and the keeper 2 which is made of a soft magnetic body having a uniform thickness, and has a keeper surface having the same size/the same area as those of the attracting surface of the magnet. Since the keeper attaching hole 1b is formed to have such the size and shape that the keeper 2 is exactly inserted, the keeper 2 has a structure not in contact with a gingiva at all. Further, a portion in contact with the gingiva is only the abutment 1 for a dental magnetic attachment according to the present invention, which is made of a titanium or a titanium alloy. Thus, since the abutment 1 has bio-compatibility, there is no problem of allergy to metal or the like. The abutment 1 for a dental magnetic attachment according to the present invention can cause a distance between the keeper attaching hole 1b and the male screw part 1a to decrease, as illustrated in Figs. 1 and 2. Thus, there are advantages that a height of the abutment can be lowered and the freedom of designing of a dental prosthesis such as a denture or the like can be enhanced in comparison with a conventional abutment.

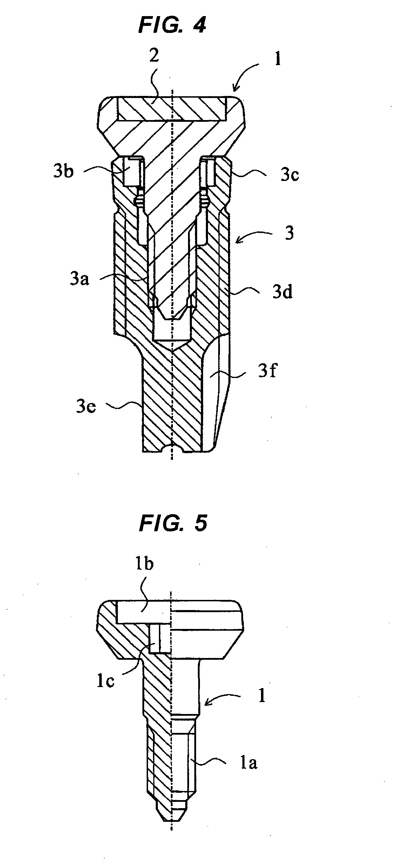

The engagement part 1c for a rotary tool is a portion for engaging an engaging part of a rotary tool used for screwing the abutment 1 into the implant fixture 3. This portion includes a hole, which has a cross sectional shape other than a circular shape (a star shape in the example illustrated in Fig. 5) and is bored at a center in the keeper attaching hole 1b, or includes a cutout part formed by partially cutting out the outer frame part around the keeper attaching hole 1b (an outer periphery of the keeper attaching hole 1b). The engagement part 1c for a rotary tool can be one of the hole having a cross sectional shape other than a circular shape and being bored at a center in the keeper attaching hole 1b and the cutout part formed at the outer frame part around the keeper attaching hole 1b, or both of them. Particularly, when the cutout part is formed at the outer frame part around the keeper attaching hole 1b, the abutment 1 can be removed from the implant fixture 3 after bonding/fixing of the keeper 2 in the keeper attaching hole 1b, so that such is preferable.

The implant fixture 3 embedded/fixed in a jawbone is made of a titanium or a titanium alloy which has bio-inertness and strength, and is properly bonded to a bone. In the example illustrated in Fig. 4, a plurality of concave grooves 3b for embedding is formed on an inner surface at the oral cavity inner side. A plurality of embedding projections for engagement, which are formed at a tip part of an embedding instrument (not illustrated) used for embedding in the jawbone, engages with the plurality of the concave grooves 3b. The female screw part 3a to which the male screw part 1a of the abutment 1 is screwed is provided at the jawbone side of the concave grooves 3b for embedding. On an outer periphery, a cylindrical collar part 3c, a self-tapping type male screw part 3d having a tapered tip, two or more cutting blades 3e for cutting the jawbone, and groove parts 3f continuous with the cutting blades 3e are provided from an end part at the oral cavity inner side. The cutting blades 3e are provided on an outer peripheral surface at the tip side of the self-tapping type male screw part 3d.

When the abutment 1 for a dental magnetic attachment according to the present invention is used, the implant fixture 3 is embedded/fixed in the jawbone at first, and then the male screw part 1a provided projectingly on the center part of the bottom surface is screwed into the female screw part 3a of the implant fixture 3, whereby the abutment 1 for a dental magnetic attachment is fixed to the implant fixture 3. The abutment 1 can be fixed in such a way that the engagement part of the rotary tool is engaged with the engagement part 1c for a rotary tool which is provided for screwing the abutment 1 to the implant fixture 3 and comprised of the hole having the cross sectional shape other than a circular shape at the center in the keeper attaching hole 1b of the abutment 1 for a dental magnetic attachment, or the cutout part at the outer frame part around the keeper attaching hole 1b, and then the rotary tool is rotated. After the abutment 1 for a dental magnetic attachment is fixed to the implant fixture 3 by the above-described process, the keeper 2 having a uniform thickness and having the same size/the same area as those of the attracting surface of the magnet is inserted into the keeper attaching hole 1b of the abutment 1 for a dental magnetic attachment, and then the keeper 2 is bonded/fixed through a dental cement or a dental bonding material.

The keeper attaching hole 1b provided at the upper surface of the abutment 1 for a dental magnetic attachment according to the present invention, which is fixed by screwing of the male screw part 1a to the female screw part 3a of the implant fixture 3, is formed to have such the size and shape that the keeper 2 having a uniform thickness and having the same size/the same area as those of the attracting surface of the magnet can be inserted and bonded/fixed. Thus, magnetic lines from the magnet can form a complete closed circuit through the keeper 2, so that the attracting force of the magnet can be utilized effectively. Further, since the keeper 2 is just inserted into the keeper attaching hole 1b and bonded/fixed, an engagement hole for a fixing tool for attaching the keeper 2 to the abutment 1 and a hole for a screw for fixing the keeper 2 to the abutment 1 does not exist at a keeper surface. Thus, the magnetic lines from the magnet can form a complete closed circuit through the keeper 2, so that the attracting force of the magnet can be utilized effectively. In addition, since filths such as food residues and the like in an oral cavity do not adhere, the abutment 1 is sanitary. Furthermore, since the abutment 1 has a structure that the keeper 2 is not in contact with a gingiva at all and a part in contact with the gingiva is made of a titanium or a titanium alloy, the abutment 1 has bio-compatibility, so that there is no problem of allergy to metal and the like.

## Claims

1. An abutment (1) for a dental magnetic attachment made of titanium or a titanium alloy, comprising:
a male screw part (1a) provided projectingly at a center part of a bottom surface, wherein the male screw part is screwed into a female screw part (3a) of an implant fixture (3);
a keeper attaching hole (1b) provided at an upper surface,
wherein a keeper (2) having a uniform thickness and the same size/the same area as those of an attracting surface of a magnet is inserted and bonded/fixed in the keeper attaching hole (1b); and
an engagement part (1c) for a rotary tool used for screwing the abutment (1) into the implant fixture (3),
wherein the engagement part (1c) consists of a hole having a cross sectional shape other than a circular shape at a center in the keeper attaching hole (1b), and/or
consists of a cutout part at an outer frame part around the keeper attaching hole (1b).
